# EUROPÄISCHE PATENTSCHRIFT

(11) **EP 0 500 132 B1**
(45) Veröffentlichungstag und Bekanntmachung des Hinweises auf die Patenterteilung: **04.09.1996**
(21) Anmeldenummer: 92102971.6
(22) Anmeldetag: 21.02.1992
(51) Int. Cl.: A23C 20/00, A23C 20/02, A23C 11/10

(54) **Verfahren zur Herstellung eines quarkähnlichen Produktes aus Sojamilch**
Process for the production of a curd-like product from soya milk
Procédé pour la production d'un produit semblable au blanc du lait à partir de lait de soja

(30) Priorität: 22.02.1991 DE 4105692
(43) Veröffentlichungstag der Anmeldung: 26.08.1992
(73) Patentinhaber: Herrmann, Martin, Prof. Dr., D-31515 Wunstorf (DE)
(72) Erfinder: Herrmann, Martin, Prof. Dr., D-31515 Wunstorf (DE)
(74) Vertreter: Glawe, Delfs, Moll & Partner

(56) Entgegenhaltungen:
- GB-A- 2 095 259
- US-A- 3 944 676
- US-A- 4 435 438
- PATENT ABSTRACTS OF JAPAN vol. 13, no. 187 (C-592), 2. Mai 1989; & JP - A - 1013958 (ASAHI CHEM. IND. LTD) 18.01.1989

## Beschreibung

Die Erfindung betrifft ein Verfahren zur Herstellung eines quarkähnlichen Produktes aus Sojamilch. Das erfindungsgemäß erhaltene Produkt weist hinsichtlich Geschmack, Geruch, Konsistenz und Aussehen milchquarkähnliche Eigenschaften auf.

Im Gegensatz zu Milchquark wird das quarkähnliche Sojaerzeugnis der Erfindung aus Sojamilch (Sojasaft) hergestellt, wobei die Sojamilch mit Hilfe von Mikroorganismen gesäuert und bei einem bestimmten pH-Bereich in die Hauptbestandteile Sojaeiweiß und Sojaserum mit Hilfe geeigneter Trennverfahren geteilt wird.

Es ist bekannt, daß die Abtrennung von Sojaeiweiß aus Sojamilch mittels Salzausfällungen erfolgen kann, wobei die Trennung nahezu im neutralen Bereich (pH 6,0 bis 7,5) erfolgt.

Hierzu wird die Sojamilch in Abhängigkeit von dem verwendeten Fällungssalz auf 60 bis 80°C erhitzt. Im Fernen Osten wird für die Ausfällung Nigari, eine Meersalzmischung, verwendet, in westlichen Ländern hingegen Calciumsulfat und Calciumchlorid. Es können auch Magnesiumsulfat, Zitronensaft, Obstessig, Essigsäure, Glucono-delta-lacton (GDL) oder verschiedene Calciumsalze (Calciumchlorid, Calciumlactat, Calciumacetat und Calciumgluconat) eingesetzt werden. Das auf diese Weise koagulierte Sojaeiweiß wird insbesondere bei Temperaturen über 60°C mittels Tüchern von dem Serum abgetrennt und durch Pressen zusätzlich entwässert. Anschließend wird der erhaltene Tofublock in Portionsstücke geschnitten, die in Wasser abgekühlt und anschließend verpackt werden.

Tofu ähnelt in seinem Gefüge einem geronnenen Hühnereiweiß, wobei die Struktur, bedingt durch das Pressen, wesentlich fester ist. Sein Gefüge ähnelt dem eines Mozzarellakäses, wobei die Tofukonsistenz allerdings nicht so elastisch ist.

Es ist weiterhin bekannt, daß man Sojaeiweiß auch allein mit Glucono-delta-lacton ausfällen kann. Diese Art der Ausfällung wird u.a. zur Herstellung von Seidentofu verwendet, wobei es sich um eine Dicklegung des gesamten, vorher konzentrierten Sojasaftes handelt. Der so erhaltene Seidentofu weist eine gallertartige, puddingartige Konsistenz auf.

Die im Verfahren der Erfindung einsetzbare Sojamilch wird üblicherweise aus ganzen geschälten Sojabohnen bzw. aus diesen durch Zerkleinern bzw. Mahlen erhaltenem Sojabohnenmehl durch Behandlung mit Wasser erhalten, vgl. Ullmanns Enzyklopädie der technischen Chemie, 4. Auflage, Band 19, S. 499 bis 503 (1980); Ullmann's Encyclopedia of Industrial Chemistry, 5th Edition, Vol. A8, p. 243 (1987), erschienen jeweils im Verlag Chemie, Weinheim. Weiterhin einsetzbar ist aus Sojamilchpulver durch Aufnehmen in Wasser erhaltene Sojamilch. So hergestellte Sojamilch enthält im wesentlichen sämtliche nützlichen Inhaltsstoffe der Sojabohne, insbesondere Proteine, Fette und Mineralstoffe, und unterscheidet sich bereits hierdurch von Proteinisolaten oder -konzentraten aus Sojabohnen, zu deren Herstellung gemäß Ullmann, 4. Auflage, Band 19, S. 501, ein entöltes zerkleinertes Sojamehl mit Laugen zur Lösung der Sojaproteine behandelt wird, wobei die Sojaproteine anschließend durch Koagulation unter Säurezusatz ausgefällt werden. Derartige Sojaproteinisolate weisen Proteingehalte zwischen etwa 50 und 90 Gew.-% auf. Der Proteingehalt von Sojamilch ist dagegen unter 50 Gew.-%, bezogen auf Trockenmasse; er liegt üblicherweise im Bereich von 40 bis 48 Gew.-%. Die Zusammensetzung (in Gew.-%) einer typischen Sojamilch im Sinne der Erfindung ergibt sich aus der folgenden Aufstellung:

| | |
|---|---|
| Trockensubstanz: | 10,2 |
| Protein: | 4,4 |
| Kohlenhydrate: | 1,6 |
| Fett: | 3,2 |
| Mineralstoffe: | 0,7 |
| Gesamtballaststoffe: | 0,3 |

Aus der US-A 4 309 344 ist ein Verfahren zur Herstellung eines Sojaerzeugnisses aus entfettetem Sojamehl bekannt, bei dem zunächst in der oben erläuterten Weise ein Proteinisolat durch Solubilisierung und Extraktion der Sojaproteine bei pH-Werten von mindestens 6,5, insbesondere 7 bis 10, und Ausfällung der Sojaproteine unter Säurezusatz bei pH-Werten von 4 bis 5 hergestellt wird; das ausgefällte Proteinisolat wird anschließend auf eine Temperatur im Bereich von 46 bis 62°C erhitzt und auf einen Feststoffgehalt von mehr als 44 Gew.-% entwässert. Der angegebene Temperaturbereich wird als kritisch bezeichnet. Infolge des hohen Feststoffgehaltes wird kein quarkähnliches Produkt, sondern ein Proteinisolat der hierfür üblichen Konsistenz erhalten.

In der US-A 3 944 676 wird ein Verfahren zur Herstellung eines Sojaproduktes beschrieben, bei dem ein entfettetes Sojamehl mit Wasser extrahiert sowie der wäßrige Extrakt auf einen pH-Wert von 6,5 bis 7 eingestellt und anschließend einer Milchsäuregärung bis zu einem pH-Wert im Bereich von 4,2 bis 5,2 unterworfen wird; das erhaltene Produkt wird, abgesehen von einer Autoklavierung bei 110 bis über 120°C zum Erhalt eines Hartkäse-ähnlichen Produkts, keiner weiteren Wärmebehandlung unterworfen.

Die US-A 4 435 438 beschreibt die Herstellung eines Sojaproteinisolates, das nach der Rekonstitution mit Wasser unter Erhitzen auf 85°C ein unlösliches Gel mit einer Struktur von geronnenem Hühnereiweiß ergibt. Als Ausgangsmaterial werden entfettetes Sojabohnenmehl oder -grieß und Sojaproteinkonzentrate oder -isolate eingesetzt, die zunächst mit Wasser extrahiert werden. Der Extrakt wird mit Säuren auf einen pH von 4 bis 5 gebracht und zum Entfernen von wasserlöslichen Kohlenhydraten, Proteinen und Mineralien gewaschen. Anschließend wird das Produkt in Wasser aufgenommen und mit Basen auf einen pH von 7 bis 8 gebracht, wobei sich das Protein löst. Anschließend wird auf eine Temperatur im Bereich von 60 bis über 110°C erhitzt, wobei das gelbildende Isolat erhalten wird. Auch hier wird kein quarkähnliches Produkt im Sinne der Erfindung erhalten.

Die DE-B 21 25 728 betrifft die Herstellung eines Proteinisolats aus entöltem Sojabohnenmehl durch Behandlung mit Wasser bei pH-Werten über 7, insbesondere 8 bis 11, Erhitzen der Lösung auf Temperaturen im Bereich von 71 bis 155°C und Ausfällung des Proteinisolats bei einem pH-Wert von 4,5 bis 5,5 durch Säurezusatz. Auch hier wird kein quarkähnliches Produkt im Sinne der Erfindung erhalten.

Schließlich ist in Patent Abstracts of Japan, C-759, Vol. 14, Nr. 431 (1990) ein Verfahren beschrieben, bei dem Sojamilch aus Sojabohnen, denen der überwiegende Anteil (60 bis 80 Gew.-%) der enthaltenen Kohlenhydrate entzogen wurde, einer Milchsäuregärung unterworfen wird; das vergorene Material wird anschließend durch Erhitzen koaguliert, wobei, da ein Wasserentzug nicht vorgesehen ist, ein Seidentofu-artiges Produkt erhalten wird.

Aus GB-A-2 095 295 ist es bekannt, ein tofu-artiges Eiweißkonzentrat aus entfettetem Sojabohnenmaterial herzustellen. Das erhaltene Produkt ist körnig mit Partikelgrößen im Bereich von vorzugsweise 1 bis 10 mm.

Aus Patent Abstracts of Japan Vol. 13, No. 197(C-592) ist es bekannt, durch Koagulierung des in der Sojamilch enthaltenen Proteins ein gelartiges Tofuprodukt herzustellen.

Sojaerzeugnisse mit milchquarkähnlichen Eigenschaften sind bisher nicht bekanntgeworden; die Erfindung ist auf die Bereitstellung eines derartigen Sojaproduktes gerichtet.

Diese Aufgabe wird erfindungsgemäß durch ein Verfahren gelöst, das durch die folgenden Schritte gekennzeichnet ist:
a) chemische oder mikrobiologische Säuerung von Sojamilch bis zum Erreichen eines pH-Wertes im Bereich von 4,2 bis 4,9 und
b) Erhitzen des gemäß Stufe a) erhaltenen, gesäuerten Produktes auf eine Temperatur im Bereich von 65 bis 95°C, insbesondere 70 bis 90°C, und
c) Abtrennung einer quarkähnlichen, einen Eiweißgehalt im Bereich von 6,0 bis 12,0, insbesondere von 8,4 bis 11,5 Gew.-% aufweisenden Phase in dem genannten Temperaturbereich.

Üblicherweise weist die vorgenannte quarkähnliche Phase eine Trockenmasse im Bereich von 14 bis 22, insbesondere von 19 bis 22 Gew.-%, auf.

Die vorstehenden Gehalte von Eiweiß und Trockenmasse ergeben eine befriedigende Konsistenz der Produkte.

Das Verfahren der Erfindung kann in den üblicherweise in Betrieben der milchverarbeitenden Industrie vorhandenen Gerätschaften und Apparaten, insbesondere Separatoren und Homogenisatoren, durchgeführt werden.

Gemäß einer vorteilhaften Ausführungsform der Erfindung erhitzt man die Sojamilch vor der Säuerung auf Temperaturen im Bereich von 70 bis 145, insbesondere von 85 bis 142°C, um das Ausgangsmaterial zu pasteurisieren bzw. zu sterilisieren. Zur Ausbeuteerhöhung kann eine pH-Anhebung über einen pH-Wert von 7,0 mit entsprechenden Basen bzw. Salzen erfolgen.

Gemäß einer weiteren vorteilhaften Ausführungsform der Erfindung führt man die chemische Säuerung mit an sich bekannten, organoleptisch verträglichen Säuren, insbesondere organischen Säuren, und/oder Säurebildnern, z.B. Glucono-delta-lacton, durch.

Gemäß einer weiteren vorteilhaften Ausführungsform der Erfindung verwendet man für die mikrobiologische Säuerung mesophile oder thermophile, Kohlenhydrate abbauende Mikroorganismen, wie sie üblicherweise in der Milchindustrie bei der Herstellung von gesäuerten Produkten eingesetzt werden, insbesondere handelsübliche, an Sojamilch adaptierte Joghurtkulturen. Besonders bevorzugt sind dabei Streptococcus thermophilus, und/oder Lactobacillus bulgaricus als thermophile Mikroorganismen, wobei Streptococcus filant zusätzlich zur Strukturverbesserung des Produkts eingesetzt werden kann.

Zu Mikroorganismenstämmen, die in der Milchindustrie für die Säuerung üblich sind und auch im Verfahren der Erfindung eingesetzt werden können, gehören auch mesophile Mikroorganismen, z.B. Streptococcus lactis, Streptococcus cremoris, Leuconostoc cremoris und Streptococcus diacetylactis, die speziell dann eingesetzt werden können, wenn sie an Sojamilch adaptiert sind. Dabei ist jedoch zu beachten, daß diese Mikroorganismen im Gegensatz zu thermophilen Stämmen erheblich längere Bebrütungszeiten aufgrund der niedrigeren Bebrütungstemperaturen erfordern. Die erfindungsgemäß bevorzugten thermophilen Mikroorganismen sind in der Milchquarkherstellung nicht üblich.

Es können sowohl konventionell gezüchtete als auch tiefgefrorene, konzentrierte, pelletisierte Kulturen verwendet werden.

Geeignete Säuerungstemperaturen liegen im Bereich von 18 bis 48°C; bevorzugt führt man die Säuerung der Sojamilch bei Temperaturen im Bereich von 32 bis 45°C durch.

Das gemäß dem Verfahren der Erfindung erhaltene quarkähnliche Sojaprodukt weist eine einwandfreie Konsistenz auf. Es kann jedoch erwünscht und gegebenenfalls auch vorteilhaft sein, das erhaltene Sojaprodukt vor der Abfüllung zu homogenisieren, um eine glattere Struktur zu erhalten. Bevorzugt erfolgt diese Homogenisierung bei Temperaturen im Bereich von 4 bis 95, insbesondere von 10 bis 80°C; man kann auch eine andere Art der mechanischen Behandlung zur Strukturverbesserung wählen, z.B. durch Einwirkung von Scherkräften. Weiterhin kann das Produkt mit Luft oder Schutzgasen aufgeschlagen werden.

Gemäß einer weiteren vorteilhaften Ausführungsform der Erfindung setzt man den homogenisierten Feststoffen Früchte oder Kräuter, gegebenenfalls jeweils in zubereiteter Form, zu. Selbstverständlich ist es auch möglich, den Sojaerzeugnissen Zucker, Salz oder andere Gewürze oder auch Speisefette zuzusetzen. Dabei ist zu beachten, daß durch diese Zusätze die Zusammensetzung der Produkte, insbesondere im Hinblick auf Trockenmasse und Eiweißgehalt, beeinflußt wird; so wird durch einen Fettzusatz der Feststoffgehalt erhöht und der Eiweißgehalt erniedrigt, wie sich aus der folgenden Aufstellung ergibt (eine Fettstufe von 30 % entspricht einem üblichen, aus Sojamilch ohne Zusätze hergestellten quarkähnlichen Erzeugnis).

| Fettgehalt in der Trockenmasse ca. | 30 % | 40 % | 70 % |
|---|---|---|---|
| Trockenmasse | 16,61 | 18,55 | 30,11 |
| Eiweiß | 7,90 | 7,66 | 6,23 |
| Fett | 5,13 | 7,42 | 21,08 |
| Kohlenhydrate | 2,78 | 2,77 | 2,20 |
| Mineralstoffe (Alle Angaben in Gew.-%) | 0,80 | 0,70 | 0,60 |

Die vorstehenden Angaben sind Mittelwerte mehrerer typischer Produkte der Erfindung.

Somit sind bei erfindungsgemäßen Produkten Trockenmassen bis über 30 Gew.-%, insbesondere bis 35 Gew.-%, erreichbar.

Höhere Fettgehalte im Endprodukt lassen sich auch durch eine Auffettung der Sojamilch vor der Säuerung erreichen; hierbei kann die Sojamilch mit Speisefetten auf einen Fettgehalt bis zu 8 % eingestellt werden.

Die Erfindung betrifft weiterhin ein Sojaerzeugnis mit milchquarkähnlichen Eigenschaften hinsichtlich Geschmack, Geruch, Konsistenz und Aussehen sowie mit einer Haltbarkeit in Abwesenheit von Bindemitteln in der quarkähnlichen Phase bei einer Heißabfüllung bzw. einer kalt-aseptischen Arbeitsweise nach dem Erhitzen der gesäuerten Sojamilch bei luftdichter Lagerung bei Umgebungstemperaturen von mindestens 4, insbesondere mindestens 6 Wochen. Die maximale Haltbarkeit unter diesen Bedingungen kann bis zu 3 Monaten und mehr betragen; die Haltbarkeit wird nicht von mikrobiologischen Vorgängen, sondern durch chemisch-physikalische Veränderungen bestimmt. Dies stellt einen wichtigen Unterschied zu Quarkerzeugnissen aus Kuhmilch dar. Diese können mit einer vergleichbaren Haltbarkeit nämlich nur dann hergestellt werden, wenn man ihnen vor der notwendigen Stufe des Erhitzens Bindemittel zusetzt.

Bei der Vergärung der Sojamilch wird im Gegensatz zur Kuhmilch, bei der die Lactose in Milchsäure umgewandelt wird, die Saccharose als Substrat für die Milchsäurebildung von den Mikroorganismen abgebaut. Während der Lactoseanteil in Kuhmilch bei etwa 4,6 % liegt, beträgt der Kohlenhydratanteil in der Sojamilch etwa 1,6 % in Abhängigkeit von den Herstellungsverfahren, wobei die Sojamilch keine Lactose enthält und ihr vor der Vergärung auch keine Lactose zugegeben werden muß.

Bei der traditionellen Herstellung von Kuhmilchquark wird die Ausgangsmilch 2 bis 3 Stunden nach der Kulturzugabe (Vorreifungszeit) mit Lab versetzt, wobei die Bebrütung zwischen 20 und 30°C ca. 15 Stunden lang erfolgt. Eine Labzugabe ist bei dem Verfahren der Erfindung nicht erforderlich.

Gemäß dem Verfahren der Erfindung hat sich nach der Bebrütung der Sojamilch eine feste Gallerte ausgebildet, die anschließend auf 65 bis 95, insbesondere auf 70 bis 90°C erhitzt wird. Die heiße, gesäuerte Sojamilch wird bei dieser Temperatur über einen Düsenseparator gefahren, wobei eine Trennung in eine quarkähnliche Masse mit hohem Eiweißanteil und Serum erfolgt. Anstelle eines Düsenseparators kann auch ein Quarksack oder ein entsprechender Quarkfertiger eingesetzt werden, mit dem sich ähnliche Ergebnisse erzielen lassen. Weiterhin kann die Abtrennung der quarkähnlichen Phase auch durch Ultrafiltration erfolgen.

Bei einer Separierung bei Temperaturen von etwa 30°C, die in der Molkereiindustrie nach dem traditionellen Speisequarkverfahren üblich sind, ist keine einwandfreie Trennung von Sojaeiweiß und Serum zu erzielen; zudem ist ein derartiges Produkt in bezug auf Geschmack, Geruch, Konsistenz und Aussehen unbefriedigend.

Für die Versuche, über die im folgenden berichtet wird, wurde ein Alfa-Laval-Separator, Baujahr 1978, mit einer Separierleistung von 10.000 l/h, bezogen auf gesäuerte Magermilch, und bei Vorversuchen ein Westfalia-Düsenseparator, Typ KNA 3-06-076, mit einer Leistung von 1000 l/h, bezogen auf gesäuerte Magermilch, verwendet. Ähnliche Ergebnisse ließen sich auch in Sackversuchen beim Auspressen anstelle von Separatoren erzielen.

Für eine bessere Übersichtlichkeit werden nachfolgend nur die mit dem Alfa-Laval-Separator erhaltenen Ergebnisse wiedergegeben.

Um eine einwandfreie Trennung quarkähnliches Produkt - Serum zu erhalten, wurde die gesäuerte Sojamilch auf 85°C im Plattenwärmeaustauscher erhitzt und bei dieser Temperatur in den Separator gefördert. Durch die Haubenkühlung des Separators kühlt sich hierbei das Produkt ab, so daß die Austrittstemperatur des Sojaquarks um 70°C liegt.

Mit dem Alfa-Laval-Separator konnte für die Trennung nur mit wesentlich verminderter Zulaufleistung mit 5 bar Gegendruck auf der Serumseite gefahren werden, wobei die folgenden Ergebnisse mit einer Sojamilch von 9,93 % T.S. (Eiweiß 4,24 %, Fett 2,97 %, Kohlenhydrate 2,10 %) erzielt wurden; diese Ergebnisse sind in der folgenden Tabelle zusammengefaßt.

**Tabelle 1**

| Trockenmasse und Eiweißgehalt in Abhängigkeit der Zulaufmenge | | | | |
|---|---|---|---|---|
| Zulaufmenge | Eiweißgehalt Quark | Eiweißgehalt Serum | T.S. Quark | T.S. Serum |
| 3500 l/h | 9,31 % | 0,51 % | 19,08 % | 3,03 % |
| 4000 l/h | 11,44 % | 0,56 % | 21,16 % | 2,99 % |
| 4500 l/h | 8,44 % | 0,50 % | 17,46 % | 2,98 % |
| 5000 l/h | 10,19 % | 0,76 % | 20,04 % | 3,37 % |
| 5500 l/h | 11,05 % | 0,85 % | 21,11 % | 3,61 % |
| 6000 l/h | 11,37 % | 1,13 % | 21,92 % | 4,20 % |

Bei einem anderen Versuch wurde das Ergebnis gemäß Tabelle 2 bei einer Zulaufleistung von 4500 l/h gesäuerter Sojamilch ermittelt.

**Tabelle 2**

| | Eiweiß % | Trockenmasse % |
|---|---|---|
| Ausgangsmilch | 4,13 | 9,82 |
| Quark | 8,57 | 17,85 |
| Molke | 0,50 | 3,03 |

Bei unterschiedlichen Zulaufmengen zum Separator wurde die Zusammensetzung des Sojaquarks und des Serums verändert, so daß man bei Zulaufleistungen zwischen 3500 und 4500 l/h Eiweißwerte im Serum um 0,5 % vorfand. Von 5000 bis 7000 l/h steigt der Eiweißwert über 1 % an; dies ließ sich schon optisch anhand des trüben Serums feststellen.

Der Trockenmassegehalt der Molke verhielt sich analog, d.h. er ist bis zu 4500 l/h konstant und stieg dann an.

Die Versuche haben weiterhin ergeben, daß die Konsistenz des Sojaquarks durch die Zulaufleistung beeinflußt werden kann. Bei der Zulaufmenge von 5500 und 4500 l/h war das Gefüge des Sojaquarks etwas grießig, bei 3.500 und 4.000 l/h wurde ein glatteres Gefüge erzielt.

Bei den Versuchen hat sich weiterhin gezeigt, daß die Separierleistung abhängig von der Temperatur ist. Selbst bei 50°C Ausgangstemperatur am Separator war noch eine Trennung möglich, nur war die Trockensubstanz der quarkähnlichen Masse unbefriedigend, d.h. sie lag hierbei um 12 % T.S.. Eine einwandfreie Trennung bei dem verwendeten Separator war bei einer Separatorausgangstemperatur von 41°C nicht mehr vorhanden. Bei einer Zulaufmenge von 4500 l/h war in dem ablaufenden Serum bereits schon optisch ein relativ hoher Eiweißanteil zu erkennen (Trübung).

Bei Speisequark aus Kuhmilch wird bei dem Separieren ein Produkt erzielt, das weitestgehend unabhängig von unterschiedlichen Zulaufmengen eine feste Relation von T.S. zu Eiweiß aufweist, wobei der Gesetzgeber in Deutschland 18 % T.S. mit einem Eiweißgehalt von 12 % vorgeschrieben hat.

Bezüglich der Quarkausbeute des Sojaquarks ist im Gegensatz zu den Verfahren der Kuhmilchquarkherstellung ein deutlicher Unterschied zu erkennen. Das schlechteste Verhältnis kg Sojamilcheinsatz : Quark lag bei 3,3 : 1. Bei einer Zulaufmenge von 4500 l/h, bei der das optisch beste Endprodukt und gute Molkeneiweißwerte vorlagen, konnte ein Verhältnis von 2,5 : 1 erzielt werden. Bei der traditionellen Quarkherstellung aus Kuhmilch mit dem Separator liegt das Ausbeuteverhältnis bei 4,8 : 1.

Um dieses Verhältnis zu verbessern, wurde für die Quarkherstellung aus Kuhmilch das Thermoquarkverfahren entwickelt. Hierbei wird durch thermische Vorbehandlung der Ausgangsmilch eine Verbindung von Kasein und Serumproteinen (Copräcipitatbildung) erreicht, wobei weiterhin die gesäuerte Magermilch auf 60°C erhitzt und vor der Separierung auf etwa 40°C gekühlt wird. Hierbei gelangen die Serumproteine während der Separierung mit in die Quarkphase und gehen nicht mit dem Serum verloren. Das Ausbeuteverhältnis liegt bei diesem Verfahren (Magermilch : Quark) bei ca. 4,2 : 1; bei Ultrafiltrationsverfahren liegen ähnliche Verhältnisse vor.

Gemäß dem Verfahren der Erfindung kann der Sojaquark zur Verbesserung der Konsistenz, wie bereits weiter oben ausgeführt wurde, nach der Separierung homogenisiert werden. Hierzu kann der Sojaquark über eine einstufige oder zweistufige Homogenisieranlage gefahren werden. Die Druckeinstellung liegt bei einem einstufigen Homogenisator um 100 bar, bei einem zweistufigen Separator wurden Drücke von 150/50 bar gewählt. Unterbleibt diese Homogenisierung, zeigt der Sojaquark eine leicht grießige Konsistenz. Eine demgegenüber gewünschte Glattheit bzw. verringerte Grießigkeit kann somit über den bzw. die Homogenisierungsdrücke gesteuert werden.

Das quarkähnliche Erzeugnis ist aufschlagfähig, wobei mit einem Aufschlaggerät, Leistung 150 l/h, der Fa. Euro Mix bei einer Produkttemperatur von 8°C und bei 52°C ein Aufschlag von 20 % mit Stickstoff erzielt wurde.

Die Erfindung wird im folgenden anhand von bevorzugten Ausführungsbeispielen näher erläutert.

In den Beispielen wurde der o.g. Alfa-Laval-Separator sowie ein üblicher Homogenisator verwendet.

### Beispiel 1.

Sojasaft der oben erwähnten Zusammensetzung mit einem auf 7,3 eingestellten pH-Wert wurde auf 90°C erhitzt und auf 45°C abgekühlt. Anschließend erfolgte die Zugabe einer handelsüblichen Mikroorganismenkultur, bestehend aus Streptococcus thermophilus und Lactobacillus bulgaricus im Verhältnis von etwa 1 : 1 sowie einem Zusatz von 5 % Streptococcus filant; diese Kultur war konventionell weitergezüchtet worden und wurde der Sojamilch in einer Menge von 1 Gew.-% zugesetzt. Anschließend erfolgte die Säuerung bis zu einem pH-Wert von 4,5; dies nahm etwa 18 h in Anspruch.

Die gesäuerte Sojamilch wurde anschließend auf 80°C erhitzt und das Eiweiß von dem Serum durch Separieren abgetrennt. Das erhaltene, quarkähnliche Produkt wurde auf 10°C abgekühlt.

Die nachfolgenden Beispiele wurden im wesentlichen gemäß der in Beispiel 1 beschriebenen Weise durchgeführt, wobei jedoch eine tiefgefrorene, konzentrierte, pelletisierte Kultur, bestehend aus den Mikroorganismen gemäß Beispiel 1, verwendet wurde.

### Beispiel 2.

Sojamilch, UHT-erhitzt auf 135°C, pH-Wert eingestellt auf 7,5,
Abkühlung auf 45°C,
Zugabe der Mikroorganismen, 0,02 Gew.-%,
Säuerung bis pH 4,7,
Erhitzen auf 80°C,
Separieren im Düsenseparator,
Homogenisieren, einstufig, 100 bar,
Abfüllen in Verpackungseinheiten,
Abkühlen.

Zur Erleichterung des betrieblichen Ablaufs kann hier auch eine Zwischenstapelung des quarkähnlichen Produktes durchgeführt werden. Hierzu erfolgt nach der Separierung eine Zwischenstapelung bei etwa 6°C. Vor der Homogenisierung wird der Sojaquark wieder auf 80°C erhitzt. Diese Arbeitsweise wird in dem folgenden Beispiel 3 erläutert.

### Beispiel 3.

Sojamilch, erhitzt auf 85°C,
Abkühlen auf 40°C,
Zugabe der Mikroorganismen (0,02 Gew.-%) (tiefgefrorene, konzentrierte Kultur),
Säuerung bis pH 4,5,
Erhitzen auf 80°C,
Separieren im Düsenseparator,
Kühlen des Produktes auf 6°C,
Zwischenstapeln,
Erhitzen auf 80°C,
Homogenisieren, zweistufig bei 150/50 bar,
Abfüllen,
Abkühlen.

Das Produkt kann vor dem Abfüllen in der oben erläuterten Weise aufgeschlagen werden.

Das Homogenisieren des quarkähnlichen Sojaproduktes kann auch in kaltem Zustand oder nach einer Erwärmung auf 30°C erfolgen, so daß nach dem Homogenisieren für die Haltbarkeitsverlängerung die Erhitzung auf eine Temperatur von vorzugsweise über 65°C erfolgt.

Bei der Homogenisierung vor der Zwischenstapelung, bei sonst unverändertem Verfahrensplan, erhält man ein Endprodukt, welches sowohl optisch als auch organoleptisch leicht grießig ist, vgl. das folgende Beispiel 4.

### Beispiel 4.

Sojamilch, erhitzt auf 90°C,
Abkühlen auf 45°C,
Zugabe der Mikroorganismen (0,02 %) (tiefgefrorene, konzentrierte Kultur),
Säuerung bis pH 4,4,
Erhitzen auf 80°C,
Separieren im Düsenseparator,
Kühlen des quarkähnlichen Produktes auf 30°C,
Homogenisieren bei 30°C, einstufig, 60 bar,
Zwischenstapeln bei 6°C,
Erhitzen auf 68°C,
Abfüllen,
Abkühlen auf 8°C.

Vor bzw. nach der Erhitzung kann die Zugabe einer Frucht- bzw. Kräuterzubereitung erfolgen, wobei auch eine kaltaseptische Abfüllung zur Haltbarkeitsverlängerung neben der Heißabfüllung durchgeführt werden kann.

Der Anteil der Fruchtzubereitung liegt bei natürlicher Süße zwischen 18 und 25 % und bei einer Standardfruchtzubereitung bei 14 bis 18 %, wobei hier noch mit Zucker oder Zuckeraustauschstoffen oder Süßstoffen nachgesüßt werden kann. Bei den Kräutersojaquarkzubereitungen werden dem Quark 2 bis 22 % Kräuter bzw. Kräuterzubereitung zudosiert.

Sojaquark und Frucht- oder Kräuterzubereitungen werden vermischt und zusammen auf 70°C erhitzt. Der Frucht/Kräutersojaquark kann direkt bei 70°C oder kaltaseptisch abgefüllt, versiegelt und anschließend auf 4 bis 6°C abgekühlt werden; dies zeigen die folgenden Beispiele 5 und 6.

### Beispiel 5.

Sojamilch, erhitzt auf 90°C,
Abkühlen auf 45°C,
Zugabe der Mikroorganismen (0,02 Gew.-%) (tiefgefrorene, konzentrierte Kultur),
Säuerung bis pH 4,5,
Erhitzen auf 80°C,
Separieren im Düsenseparator,
Kühlen des quarkähnlichen Produktes auf 6°C,
Zwischenstapeln,
Anwärmen auf 30°C,
Homogenisieren, zweistufig, 100/100 bar,
Zugabe der Frucht- oder Kräuterzubereitung,
Erhitzen auf 70°C,
Abfüllen, Verschließen und Abkühlen.

Bei Beispiel 6 kann die Abfüllung zusätzlich unter sterilen Bedingungen erfolgen, damit eine Haltbarkeitsverlängerung gegeben ist. Hierbei sollte der Verfahrensweg nach dem zweiten Erhitzen auf 80°C reinfektionsfrei ausgelegt werden.

### Beispiel 6.

Sojamilch, erhitzt auf 80°C,
Abkühlen auf 40°C,
Zugabe der Mikroorganismen (0,02 Gew.-%), (tiefgefrorene, konzentrierte Kultur),
Säuerung bis pH 4,7,
Erhitzen auf 80°C,
Separieren im Düsenseparator,
Kühlen des quarkähnlichen Produktes auf 6°C,
Zwischenstapeln,
Anwärmen auf 30°C,
Homogenisieren bei 30°C,
Abkühlen auf unter 10°C,
Zugabe der Frucht- oder Kräuterzubereitung,
kaltaseptische Abfüllung.

## Patentansprüche

1. Verfahren zur Herstellung eines quarkähnlichen Produktes aus Sojamilch, gekennzeichnet durch die Schritte
a) chemische oder mikrobiologische Säuerung von Sojamilch bis zum Erreichen eines pH-Wertes im Bereich von 4,2 bis 4,9, und
b) Erhitzen des gemäß Stufe a) erhaltenen, gesäuerten Produktes auf eine Temperatur im Bereich von 65 bis 95°C, insbesondere 70 bis 90°C, und
c) Abtrennung einer quarkähnlichen, einen Eiweißgehalt im Bereich von 6,0 bis 12,0, insbesondere von 8,4 bis 11,5 Gew.-%, aufweisenden Phase in dem genannten Temperaturbereich.

2. Verfahren nach Anspruch 1, dadurch gekennzeichnet, daß man die Sojamilch vor der Säuerung auf Temperaturen im Bereich von 70 bis 145°, insbesondere 85 bis 142°C erhitzt und auf die Temperatur des Säuerungsschrittes abkühlt.

3. Verfahren nach Anspruch 1 oder 2, dadurch gekennzeichnet, daß man organoleptisch verträgliche Säuren und/oder Glucono-delta-lacton als chemisches Säuerungsmittel verwendet.

4. Verfahren nach Anspruch 1 oder 2, dadurch gekennzeichnet, daß man für die mikrobiologische Säuerung mesophile oder thermophile, Kohlenhydrate abbauende Mikroorganismen verwendet.

5. Verfahren nach Anspruch 4, dadurch gekennzeichnet, daß man für die mikrobiologische Säuerung Streptococcus thermophilus und/oder Lactobacillus bulgaricus verwendet.

6. Verfahren nach mindestens einem der Ansprüche 1 bis 5, dadurch gekennzeichnet, daß man die Säuerung der Sojamilch bei einer Temperatur im Bereich von 32 bis 45°C durchführt.

7. Verfahren nach mindestens einem der Ansprüche 1 bis 6, dadurch gekennzeichnet, daß man das abgetrennte quarkähnliche Produkt homogenisiert.

8. Verfahren nach mindestens einem der Ansprüche 1 bis 7, dadurch gekennzeichnet, daß man die Homogenisierung der Feststoffe bei Temperaturen im Bereich von 10 bis 95, insbesondere von 30 bis 80°C, durchführt.

9. Verfahren nach mindestens einem der Ansprüche 1 bis 8, dadurch gekennzeichnet, daß man das quarkähnliche Produkt mit Luft oder Schutzgasen aufschlägt.

10. Verfahren nach mindestens einem der Ansprüche 1 bis 9, dadurch gekennzeichnet, daß man dem homogenisierten Produkt Früchte oder Kräuter, gegebenenfalls jeweils in zubereiteter Form, zusetzt.

11. Sojaerzeugnis mit milchquarkähnlichen Eigenschaften hinsichtlich Geschmack, Geruch, Konsistenz und Aussehen sowie mit einer Haltbarkeit in Abwesenheit von Bindemitteln in der quarkähnlichen Phase bei einer Heißabfüllung bzw. einer kalt-aseptischen Arbeitsweise nach dem Erhitzen der gesäuerten Sojamilch bei luftdichter Lagerung bei Umgebungstemperaturen von mindestens 4, insbesondere mindestens 6 Wochen, erhältlich durch ein Verfahren nach mindestens einem der Ansprüche 1 bis 10.

## Claims

1. A method for the preparation of a curd-like product from soya milk, characterised by the steps of
a) chemical or microbiological souring of soya milk until reaching a pH value in the range of from 4.2 to 4.9, and
b) heating the soured product obtained according to step a) to a temperature in the range of from 65 to 95°C, in particular from 70 to 90°C, and
c) separation of a curd-like phase having an albumen content in the range of from 6.0 to 12.0, in particular from 8.4 to 11.5 % by weight, in said temperature range.

2. A method according to Claim 1, characterised in that, before the souring, the soya milk is heated to temperatures in the range of from 70 to 145°, in particular 85 to 142°C, and is cooled to the temperature of the souring step.

3. A method according to Claim 1 or 2, characterised in that organoleptically compatible acids and/or glucono-delta-lacton are used as the chemical souring agent.

4. A method according to Claim 1 or 2, characterised in that mesophilic or thermophilic microorganisms, which decompose carbohydrates, are used for the microbiological souring.

5. A method according to Claim 4, characterised in that Streptococcus thermophilus and/or Lactobacillus bulgaricus are used for the microbiological souring.

6. A method according to any one of Claims 1 to 5, characterised in that the souring of the soya milk is carried out at a temperature in the range of from 32 to 45°C^{.}

7. A method according to any one of Claims 1 to 6, characterised in that the separated curd-like product is homogenised.

8. A method according to any one of Claims 1 to 7, characterised in that the homogenisation of the solids is carried out at temperatures in the range of from 10 to 95, in particular from 30 to 80°C.

9. A method according to any one of Claims 1 to 8, characterised in that the curd-like product is acted upon with air or protective gases.

10. A method according to any one of Claims 1 to 9, characterised in that fruit or herbs, optionally each in a prepared form, are added to the homogenized product.

11. A soya product with milk curd-like properties in respect of taste, smell, consistency and appearance, and with a keeping quality, in the absence of binding agents, in the curd-like phase with hot filling or a cold-aseptic mode of operation after the heating of the soured soya milk under air-tight storage at ambient temperature of at least 4 weeks, in particular 6 weeks, which can be obtained in accordance with at least one method of Claims 1 to 10.

## Revendications

1. Procédé pour la fabrication d'un produit de type caillé à partir de lait de soja, caractérisé par les étapes suivantes:
a) acidification chimique ou microbiologique de lait de soja jusqu'à l'obtention d'un pH dans la plage de 4,2 à 4,9, et
b) chauffage du produit acidifié, obtenu selon l'étape a), à une température dans la plage allant de 65 à 95°C, en particulier de 70 à 90°C, et
c) séparation d'une phase de type caillé, présentant une teneur en protéines dans la plage allant de 6,0 à 12,0, en particulier de 8,4 à 11,5 % en poids, dans la plage de températures indiquée.

2. Procédé selon la revendication 1, caractérisé en ce que, avant l'acidification, on chauffe le lait de soja à des températures dans la plage allant de 70 à 145°, en particulier de 85 à 142°C, et on le refroidit jusqu'à la température de l'étape d'acidification.

3. Procédé selon la revendication 1 ou 2, caractérisé en ce que l'on utilise comme agent d'acidification chimique des acides organoleptiquement acceptables et/ou la glucono-δ-lactone.

4. Procédé selon la revendication 1 ou 2, caractérisé en ce que, pour l'acidification microbiologique, on utilise des micro-organismes mésophiles ou thermophiles, dégradant les glucides.

5. Procédé selon la revendication 4, caractérisé en ce que, pour l'acidification microbiologique, on utilise *Streptococcus thermophilu*s et/ou *Lactobacillus bulgaricus.*

6. Procédé selon au moins l'une des revendications 1 à 5, caractérisé en ce que l'on effectue l'acidification du lait de soja à une température dans la plage allant de 32 à 45°C.

7. Procédé selon au moins l'une des revendications 1 à 6, caractérisé en ce que l'on homogénéise le produit de type caillé séparé.

8. Procédé selon au moins l'une des revendications 1 à 7, caractérisé en ce que l'on effectue l'homogénéisation des substances solides à des températures dans la plage allant de 10 à 95, en particulier de 30 à 80°C.

9. Procédé selon au moins l'une des revendications 1 à 8, caractérisé en ce que l'on fait monter le produit de type caillé avec de l'air ou des gaz protecteurs.

10. Procédé selon au moins l'une des revendications 1 à 9, caractérisé en ce que l'on ajoute au produit homogénéisé des fruits ou des herbes, éventuellement chacun sous forme préparée.

11. Produit à base de soja, présentant des propriétés de type caillé de lait eu égard au goût, à l'odeur, à la consistance et à l'aspect, ainsi qu'une aptitude à la conservation en absence de liants dans la phase de type caillé, dans le cas d'un remplissage à chaud ou d'un mode opératoire aseptique-froid après le chauffage du lait de soja acidifié, avec un stockage à l'abri de l'air et aux températures ambiantes, d'au moins 4 semaines, en particulier d'au moins 6 semaines, pouvant être obtenu selon au moins un procédé des revendications 1 à 10.
